(19) **Europäisches Patentamt** / **European Patent Office** / **Office européen des brevets**

(11) **EP 4 667 518 A1**

(12) # EUROPEAN PATENT APPLICATION

(43) Date of publication:
24.12.2025 Bulletin 2025/52

(21) Application number: 24183248.4

(22) Date of filing: 20.06.2024

(51) International Patent Classification (IPC):
*C08K 3/016* (2018.01)   *C08L 51/08* (2006.01)

(52) Cooperative Patent Classification (CPC):
(C-Sets available)
**C08L 51/08;** C08K 3/016; C08K 2003/2224;
C08K 2003/2227; C08K 2201/005; C08K 2201/006;
C08L 2201/02   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **GSCHNEIDTNER, Tina**
**44486 Stenungsund (SE)**

• **Karlsson, Linus**
**44455 Stenungsund (SE)**
• **THUNBERG, Johannes**
**444 86 Stenungsund (SE)**
• **Hjärtfors, Emil**
**442 41 Kungälv (SE)**
• **Choi, Eun Ho**
**Chungcheongnam-do (KR)**
• **Yun, Jun Hyeong**
**Cheonan-si, (KR)**

(74) Representative: **Maiwald GmbH**
**Elisenhof**
**Elisenstraße 3**
**80335 München (DE)**

(54) **FLAME RETARDANT POLYMER COMPOSITION**

(57)   The present invention relates to a flame retardant polymer composition comprising at least the following components (A) 10.0 to 30.0 wt.-% based on the overall weight of the polymer composition of a cross-linkable ethylene copolymer containing units with hydrolysable silane groups; (B) 5.0 to 20.0 wt.-% based on the overall weight of the polymer composition of a copolymer of ethylene and a $C_4$ to $C_{10}$ alpha olefin comonomer having a density in the range of 860 kg/m$^3$ to 965 kg/m$^3$ determined according to ISO 1183; (C) 50.0 to 70.0 wt.-% based on the overall weight of the polymer composition of a filler selected from the group consisting of aluminium hydroxide, magnesium hydroxide and mixtures thereof; (D) 0.50 to 3.0 wt.-% based on the overall weight of the polymer composition of silicone fluid and/or a silicon gum; and (E) 1.0 to 10.0 wt.% based on the overall weight of the polymer composition of a polyethylene containing units originating from maleic anhydride; and/or wherein the weight proportions of components (A) to (E) add up to 100 wt.-%. In addition, the present invention refers to a wire or cable comprising at least one layer comprising the polymer composition according to the present invention, a method for producing the polymer composition and to the use of the polyolefin composition according to the present invention as a flame retardant layer of a wire or cable.

**EP 4 667 518 A1**

(52) Cooperative Patent Classification (CPC): (Cont.)

C-Sets
**C08L 51/08, C08L 23/0815, C08L 51/06,
C08L 83/04, C08K 3/22;
C08L 51/08, C08L 23/0815, C08L 51/06,
C08L 83/04, C08K 2003/2227**

**Description**

The present invention relates to a flame retardant polymer composition and to the use of said polymer composition as a flame retardant layer of a wire or cable. In addition, the present invention refers to a wire or cable comprising at least one layer comprising the polymer composition according to the present invention, a method for producing the polymer composition and to the use of the polyolefin composition according to the present invention as a flame retardant layer of a wire or cable.

In order to achieve excellent flame retardant properties often halogenated flame retardants, for examples derivatives of chlorendic acid or organobromines such as decabromodiphenyl, are used. Most of these organohalogen compounds are used together with antimony trioxide as a synergist. In Europe there is a growing demand for polymer compositions with halogen-free flame retardants. Typical systems are mineral filled systems such as aluminium hydroxide or magnesium hydroxide. These halogen-free systems require a big amount of filler reducing the mechanical properties of the compound. Therefore, boosters like antimony oxide are often used. However, antimony oxide is not a healthy booster, but it is toxic to aquatic life, harmful if swallowed, inhaled, suspected of causing cancer. There is the need for filled halogen-free systems being non-toxic and allowing to obtain good mechanical properties, while fulfilling the flame retardant requirements.

Flame retardant polymer composition for wire and cable applications are already known from the prior art.

WO 2018/160457 A1 refers to polymer composites, which are commonly for use as sheathing materials in wire and cable applications. The sheathing materials exhibit flame retardant properties and include a polymeric blend, which includes olefin/unsaturated ester copolymer and olefin (co)polymer, a hydrated metal oxide flame-retardant, such as magnesium hydroxide, and an antimony compound.

WO 2020/126618 A1 relates to a cross-linkable, grafted or non-grafted polymer composition comprising a cross-linkable copolymer containing hydrolysable silane groups. Furthermore, a crosslinked polymer composition obtained by cross-linking the cross-linkable copolymer containing hydrolysable silane groups and an article comprising the same are disclosed. Another aspect relates to the use of one or more cross-linking accelerators for accelerating the crosslinking of a cross-linkable copolymer containing hydrolysable silane groups.

The polymer compositions for wire and cable applications known from the prior art do not show excellent flame retardant properties and at the same time good mechanical properties. In addition, many known flame retardant polymer compositions are based on halogen compounds as flame retardant or synergists, being critical from an environmental point of view. Furthermore, the flame retardant polymer compositions known from the prior art are not easy to process and for the compositions containing aluminium trihydroxide as flame retardant the extruder output is limited.

Starting therefrom it was the objective of the present invention to overcome these deficiencies and to provide flame retardant polymer compositions having not only excellent flame retardant properties, but showing in addition good mechanical properties. In addition, it was object of the present invention to provide flame retardant compositions based on halogen-free compounds. Another object of the present invention was to provide flame-retardant polymer compositions being easy to process and allowing a high extruder output.

These objects have been solved by the flame retardant polymer composition according to claim 1 comprising at least the following components

(A) 10.0 to 30.0 wt.-% based on the overall weight of the polymer composition of a cross-linkable ethylene copolymer containing units with hydrolysable silane groups;
(B) 5.0 to 20.0 wt.-% based on the overall weight of the polymer composition of a copolymer of ethylene and a $C_4$ to $C_{10}$ alpha olefin comonomer having a density in the range of 860 kg/m$^3$ to 965 kg/m$^3$ determined according to ISO 1183;
(C) 50.0 to 70.0 wt.-% based on the overall weight of the polymer composition of a filler selected from the group consisting of aluminium hydroxide, magnesium hydroxide and mixtures thereof;
(D) 0.50 to 3.0 wt.-% based on the overall weight of the polymer composition of silicone fluid and/or a silicon gum; and
(E) 1.0 to 10.0 wt.% based on the overall weight of the polymer composition of a polyethylene containing units originating from maleic anhydride;

wherein the weight proportions of components (A) to (E) add up to 100 wt.-%.

Advantageous embodiments of the polymer composition in accordance with the present invention are specified in the dependent claims 2 to 12.

Claim 13 refers to a method for producing the polymer composition according to the invention and claim 14 relates a wire or cable comprising at least one layer comprising said polymer composition. The present invention further relates in accordance with claim 15 to the use of the polymer composition as described in claims 1 to 12 as a flame retardant layer of a wire or cable.

**<u>Definitions</u>**

Indications of Quantity

The polymer compositions in accordance with the present invention comprise the components (A) to (E) and optionally component (F) and/or additives. The requirement applies here that the components (A) to (E) and if present component (F) and/or the additives add up to 100 wt.-% in sum. This means for example in case that only components (A) to (E) are present these components add up to 100 wt.-%, but in case that components (A) to (F) are present (A) to (F) add up to 100 wt.-%. The fixed ranges of the indications of quantity for the individual components (A) to (E) and optionally component (F) and/or the additives are to be understood such that an arbitrary quantity for each of the individual components can be selected within the specified ranges provided that the strict provision is satisfied that the sum of all the components (A) to (E) and optionally component (F) and/or the additives add up to 100 wt.-%.

Throughout the present application, the particle size of a fraction of a particulate material is described by its particle size distribution. The value d, represents the diameter relative to which x % by weight of the particles have diameters less than $d_x$. The $d_{50}$ value is thus the "median particle size" at which 50 wt.-% of all particles are smaller than the indicated particle size.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Component (A)

The polymer composition in accordance with the present invention comprises as component (A) 10.0 to 30.0 wt.-% based on the overall weight of the polymer composition of a cross-linkable ethylene copolymer containing hydrolysable silane groups. Preferred embodiments of component (A) will be discussed in the following.

Component (A) preferably has one or more of the following properties:

- Is a terpolymer comprising methyl acrylate units, preferably the content of methyl acrylate units is in the range of 10 to 35 wt.-% and more preferably in the range of 20 to 30 wt.-% based on the overall weight of component (A);
- Has a density determined according to ISO 1183 in the range of 920 to 960 $kg/m^3$ and preferably in the range of 935 to 950 $kg/m^3$;
- Has a $MFR_2$ determined according to ISO 1133 in the range of 0.1 to 10 g/10 min and preferably in the range of 0.5 to 1.5 g/10 min or 3.0 to 4.0 g/10 min;
- The units with hydrolysable silane-groups are represented by formula (I):

$$R^1SiR^2_qY_{3-q} \qquad (I)$$

wherein
$R^1$ is an ethylenically unsaturated hydrocarbyl, hydrocarbyloxy or (meth)acryloxy hydrocarbyl group, each $R^2$ is independently an aliphatic saturated hydrocarbyl group, each Y may be the same or different, is a hydrolysable organic group and q is 0, 1 or 2.

Another preferred embodiment according to the present invention stipulates that the content of component (A) in the polymer composition is in the range of 12.0 to 28.0 wt.%, preferably in the range of 15.0 to 25.0 wt.-% and more preferably in the range of 18.0 to 22.0 wt.-% based on the overall weight of the polymer composition;

A preferred embodiment in accordance with the present invention stipulates that component (A) comprises and preferably consists of a copolymer of ethylene which bears silane group(s) containing units as functional groups containing units; or a copolymer of ethylene comprising one or more polar comonomer unit(s) selected from (C1-C6)-alkyl acrylate or (C1-C6)-alkyl (C1-C6)-alkyl acrylate comonomer units, and bears silane group(s) containing units as functional groups containing units different from said polar comonomer unit(s).

According to one further preferred embodiment in accordance with the present invention component (A) is a terpolymer of ethylene with methyl acrylate comonomer units and vinyl trimethoxysilane comonomer units. The content of the methyl acrylate comonomer units present in the polymer of ethylene is preferably in the range of 4.5 to 18 mol-%, more preferably of 5.0 to 18.0 mol-%, still more preferably of 6.0 to 18.0 mol-%, even more preferably of 6.0 to 16.5 mol-%, even still more preferably of 6.8 to 15.0 mol-%, most preferably of 7.0 to 13.5 mol-%. The content of the vinyl trimethoxysilane comonomer units present in the polymer of ethylene is preferably in the range of 0.01 to 1.00 mol-%, more preferably of 0.05 to 0.80 mol-% and still more preferably of 0.10 to 0.60 mol-%.

The silane group(s) containing units and the polymer can be present as separate components, i.e. as blend, in the polymer composition of the invention. Alternatively, the silane group(s) containing units can be present as a comonomer of the polymer or as a compound grafted chemically to the polymer. In general, copolymerisation and grafting of the silane group(s) containing units to ethylene are well known techniques and well documented in the polymer field and within the skills of a skilled person.

In case of a blend, the silane group(s) containing units component can be a silane group(s) containing polymer or a silane group(s) containing compound. Said silane group(s) containing compound may, at least partly, be reacted chemically with the polymer, e.g. grafted to polymer, using optionally e.g. a radical forming agent, such as peroxide. Such chemical reaction may take place before or during the lamination process of the invention.

Preferably the silane group(s) containing units are present (bonded) in the polymer. More preferably, the polymer bears functional group(s) containing units, whereby said functional group(s) containing units are said silane group(s) containing units. In this embodiment the silane group(s) containing units can be copolymerised or grafted to the polymer. Accordingly, the silane group(s) containing units as the preferable functional group(s) containing units are preferably present in said polymer in form of comonomer units or in form of grafted compounds.

In a more preferable embodiment of the present invention, the polymer comprises functional group(s) containing units which are the silane group(s) containing units as comonomer in the polymer. The copolymerisation provides more uniform incorporation of the silane units. Moreover, the copolymerisation does not require the use of peroxide which is typically needed for the grafting of said units to polyethylene. It is known that peroxide brings limitations to the choice of MFR of the polymer used as a starting polymer (during grafting the MFR of the polymer decreases since the peroxide not only initiates the grafting but also crosslinks the polymer) the decomposition products formed from peroxide can deteriorate the quality of the polymer.

The silane group(s) containing comonomer unit or compound as the silane group(s) containing units is suitably a hydrolysable unsaturated silane compound represented by the formula

$$R^1SiR^2_qY_{3-q} \qquad (I)$$

wherein

R1 is an ethylenically unsaturated hydrocarbyl, hydrocarbyloxy or (meth)acryloxy hydrocarbyl group,
each R2 is independently an aliphatic saturated hydrocarbyl group,
Y which may be the same or different, is a hydrolysable organic group and
q is 0, 1 or 2.

Special examples of the unsaturated silane compound are those wherein R1 is vinyl, allyl, isopropenyl, butenyl, cyclohexanyl or gamma-(meth)acryloxy propyl; Y is methoxy, ethoxy, formyloxy, acetoxy, propionyloxy or an alkyl- or arylamino group; and R2, if present, is a methyl, ethyl, propyl, decyl or phenyl group.

Further suitable silane compounds or, preferably, comonomers are e.g. gamma-(meth)acryl-oxypropyl trimethoxysilane, gamma(meth)acryloxypropyl triethoxysilane, and vinyl triacetoxysilane, or combinations of two or more thereof.

As a suitable subgroup of unit of formula (I) is an unsaturated silane compound or, preferably, comonomer of formula (II)

$$CH_2=CHSi(OA)_3 \qquad (II)$$

wherein each A is independently a hydrocarbyl group having 1 to 8 carbon atoms, suitably 1 to 4 carbon atoms.

In one embodiment of silane group(s) containing units of the invention, comonomers/compounds of formula (I), preferably of formula (II), are selected from vinyl trimethoxysilane, vinyl bismethoxyethoxysilane, vinyl triethoxysilane, vinyl trimethoxysilane. Mostly preferred is vinyl trimethoxysilane.

Component (A) preferably has a melt flow rate $MFR_2$ (2.16 kg; 190°C) of less than 20 g/10 min, preferably from 0.1 to 15 g/10 min, more preferably from 0.2 to 13 g/10 min, still more preferably from 0.3 to 13, most preferably from 0.4 to 13 g/10 min.

The density of component (A) is preferably is higher than 860 kg/m³. Preferably the density is not higher than 970 kg/m³, and more preferably is from 920 to 960 kg/m³, according to ISO 1872-2.

Component (A) preferably has a Shear thinning index, $SHI_{0.05/300}$, of 30.0 to 100.0, preferably of 40.0 to 80.0, when measured according to "Rheological properties: Dynamic Shear Measurements (frequency sweep measurements)" as described below under "Determination Methods".

Component (A) of the polymer composition can be e.g. commercially available or can be prepared according to or analogously to known polymerization processes described in the chemical literature. Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R. Klimesch, D. Littmann and F.-O. Mähling pp. 7181-7184.

Component (B)

The polymer composition according to the present invention comprises as component (B) 5.0 to 20.0 wt.-% based on the overall weight of the polymer composition of a copolymer of ethylene and a $C_4$ to $C_{10}$ alpha olefin comonomer having a density in the range of 860 kg/m$^3$ to 965 kg/m$^3$ determined according to ISO 1183.

Preferred embodiments of component (B) will be discussed in the following.

According to one embodiment of the present invention component (B) has one or more of the following properties:

- is a copolymer of ethylene and 1-octene;
- has a density in the range of 870 kg/m$^3$ to 910 kg/m$^3$, preferably in the range of 870 to 900 kg/m$^3$ and more preferably in the range of 880 to 890 kg/m$^3$ measured according to ISO 1183;
- has a MFR$_2$ in the range of 0.1 to 20.0 g/10 min, preferably in the range of 0.5 to 1.5 g/10 min or 9.0 to 11.0 g/10 min measured according to ISO 1133 at 190°C and a load of 2.16 kg.

According to another preferred embodiment of the present invention the content of component (B) in the polymer composition is in the range of 6.0 to 18.0 wt.%, preferably in the range of 6.5 to 15.0 wt.-% and more preferably in the range of 7.5 to 14.0 wt.-% based on the overall weight of the polymer composition.

A preferred embodiment in accordance with the present invention stipulates that component (B) is a copolymer of ethylene and 1-octene; whereby said copolymer preferably has a density in the range of 870 kg/m$^3$ to 910 kg/m$^3$, more preferably in the range of 870 to 900 kg/m$^3$ and even more preferably in the range of 880 to 890 kg/m$^3$ measured according to ISO 1183.

In another preferred embodiment in accordance with the present invention component (B) is manufactured by using a single-site catalyst and preferably is a copolymer of ethylene and 1-octene manufactured by using a single-site catalyst.

Still another preferred embodiment stipulates that the MFR$_2$ of component (B) is in the range of 0.5 to 1.5 g/10 min or 9.0 to 11.0 g/10min, preferably in the range of 0.5 to 1.55 g/10 min or 9.0 to 11.0 g/10 min measured according to ISO 1133 at 190°C and a load of 2.16 kg, preferably component (B) is a copolymer of ethylene and 1-octene having said MFR$_2$.

Copolymers of ethylene and 1-octene which may be used as component (B) are commercially available, for example from Borealis AG (Austria) under the tradenames Queo 8201 or Queo 8210.

Component (C)

The polymer composition according to the present invention comprises as component (C) 50.0 to 70.0 wt.-% based on the overall weight of the polymer composition of a filler selected from the group consisting of aluminium hydroxide, magnesium hydroxide and mixtures thereof.

Preferred embodiments of component (C) will be discussed in the following.

The content of component (C) in the polymer composition is preferably in the range of 52.0 to 68.0 wt.%, more preferably in the range of 55.0 to 65.0 wt.-% and still more preferably in the range of 58.0 to 62.0 wt.-% based on the overall weight of the polymer composition.

Still another preferred embodiment of the present invention stipulates that component (C) is aluminium hydroxide, preferably having one or more of the following properties:

- a purity of > 95 %, preferably of > 98 %, more preferably of > 99 %, even more preferably in the range of 99.0 to 99.9 %;
- a particle size $d_{50}$ in the range of 0.1 to 10 $\mu$m, preferably in the range of 0.5 to 5 $\mu$m and more preferably in the range of 1.0 to 2.5 $\mu$m;
- a BET surface area in the range of 3 to 5 m$^2$/g;
- is not coated.

Aluminium hydroxides which may be used as component (C) are commercially available, for example from Nabaltec (Germany) under the tradename Apyral® 40CD.

According to a preferred embodiment in accordance with the present invention component (C) is an aluminium hydroxide which is used in the form of particles whose surface has been not treated, this means the aluminum hydroxide is preferably not coated. However, the use of surface-treated aluminum hydroxide is not excluded.

Still more preferably component (C) is an aluminium hydroxide having a median particle size $d_{50}$ in the range of 1.0 to 10.0 µm, preferably in the range of 0.5 to 5.0 µm and still more preferably in the range of 1.0 to 2.5 µm.

In still another preferred embodiment in accordance with the present invention component (D) is a ground or precipitated aluminium hydroxide having a purity of > 95 %, preferably of > 98 %, more preferably of > 99 %, even more preferably in the range of 99.0 to 99.9 %.

According to a further preferred embodiment in accordance with the present invention component (C) is a ground or precipitated magnesium hydroxide and more preferably is a ground magnesium hydroxide.

Precipitated magnesium hydroxides are in general more expensive than ground magnesium hydroxides, but precipitated magnesium hydroxide types are still dominating because due to their smaller particle size and more homogenous particle size distribution they do not significantly deterioate the mechnical properties of the polymer matrix.

In accordance with the present invention a "ground magnesium hydroxide" is a magnesium hydroxide obtained by grinding minerals based on magnesium hydroxide, such as brucite and the like. Brucite is found in its pure form or, more often, in combination with other minerals such as calcite, aragonite, talc or magnesite, often in stratified form between silicate deposits, for instance in serpentine asbestos, in chlorite or in schists.

The mineral containing magnesium hydroxide can be ground according to the following technique. Advantageously, the mineral as obtained from the mine is first crushed, then ground, preferably repeatedly, each crushing/grinding step being followed by a sieving step. The grinding can be effected under wet or dry conditions, for example by ball-milling, optionally in the presence of grinding coadjuvants, for example polyglycols or the like.

According to a preferred embodiment in accordance with the present invention component (C) is a magnesium hydroxide which is used in the form of particles whose surface has been treated with at least one saturated or unsaturated fatty acid containing from 8 to 24 carbon atoms, or a metal salt thereof, such as, for example: oleic acid, palmitic acid, stearic acid, isostearic acid, lauric acid; magnesium or zinc stearate or oleate; and the like. Component D) may also be used without surface treatment.

Still more preferably component (C) is a ground magnesium hydroxide having a median particle size $d_{50}$ in the range of 1.0 to 10.0 µm, preferably in the range of 2.0 to 5.0 µm and still more preferably in the range of 3.0 to 4.0 µm.

Another preferred embodiment of the present invention stipulates that component (C) is a ground magnesium hydroxide surface-treated with stearic acid, preferably the content of stearic acid is 1.0 to 3.0 wt.-% and more preferably 1.5 to 2.5 wt.-% based on the weight of the ground magnesium hydroxide.

In still another preferred embodiment in accordance with the present invention component (C) is a ground or precipitated magnesium hydroxide having a BET surface area in the range of 1 to 20 m$^2$/g and preferably in the range of 5 to 12 m$^2$/g.

Component (D)

The polymer composition according to the present invention comprises as component (D) 0.50 to 3.0 wt.-% based on the overall weight of the polymer composition of silicone fluid and/or a silicon gum.

The content of component (D) in the polymer composition is preferably in the range of 0.6 to 2.8 wt.%, more preferably in the range of 0.7 to 2.5 wt.-% and still more preferably in the range of 0.8 to 2.2 wt.-% based on the overall weight of the polymer composition.

Still a further preferred embodiment in accordance with the present invention stipulates that component (D) is a silicone fluid or silicone gum selected from the group consisting of polysiloxanes, preferably polydimethylsiloxane, and siloxanes containing alkoxy or alkyl functional groups and mixtures thereof, preferably component (D) is an organomodified siloxane.

According to another preferred embodiment in accordance with the present invention component (D) is an organopolysiloxane polymer comprising chemically combined siloxy units. Preferably, the siloxy units are selected from the group consisting of $R_3SiO_{0.5}$, $R_2SiO$, $R^1SiO_{1.5}$, $R^1R_2SiO_{0.5}$, $RR^1SiO$, $R^1{}_2SiO$, $RSiO_{1.5}$ and $SiOz$ units and mixtures thereof in which each R represents independently a saturated or unsaturated monovalent hydrocarbon substituent, and each $R^1$ represents a substituent such as R or a substituent selected from the group consisting of a hydrogen atom, hydroxyl, alkoxy, aryl, vinyl or allyl groups.

Still another preferred embodiment in accordance with the present invention stipulates that component (D) is an organopolysiloxane having a viscosity of approximately 600 to 300·10$^6$ centipoise at 25°C. An example of an organopolysiloxane which has been found to be suitable is a polydimethylsiloxane having a viscosity of approximately 1800 to 2200 mPa·s at 25°C. Furthermore, it is preferred that the organomodified siloxane is linear.

Suitable silicone fluids and/or a silicon gums which may be used as component (D) are commercially available, for example from Wacker AG (Germany) as PTSP 2000 or Tegomer 4042 from Evonik (Germany).

Component (E)

The polymer composition according to the present invention comprises as component (E) 1 to 10.0 wt.% based on the overall weight of the polymer composition of a polyethylene containing units originating from maleic anhydride.

The content of component (E) in the polymer composition is preferably in the range of 2.0 to 8.0 wt.%, more preferably in the range of 3.0 to 7.0 wt.-%, even more preferably in the range of 3.5 to 5.5 wt.-% based on the overall weight of the polymer composition.

In one preferred embodiment component (E) has one or more of the following properties:

- is obtained by copolymerising and/or grafting polyethylene with maleic acid anhydride, whereby a maleic acid anhydride grafted linear low density polyethylene is preferred, more preferably the content of maleic acid anhydride is in the range of 0.3 to 2.0 wt.-% based on the total weight of component (E);
- has a density determined according to ISO 1183 in the range of 910 to 950 $kg/m^3$ and preferably in the range of 930 to 940 $kg/m^3$;
- has a $MFR_2$ determined according to ISO 1133 in the range of 0.5 to 5 g/10 min and preferably in the range of 1.5 to 3.5 g/10 min.

According to another preferred embodiment in accordance with the present invention component (E) is obtained by copolymerising and/or grafting polyethylene with maleic acid anhydride, whereby a grafted linear low density polyethylene is preferred, more preferably the content of maleic acid anhydride is in the range of 0.3 to 2.0 wt.-%.

In a further preferred embodiment of the present invention component (E) has a density determined according to ISO 1183 in the range of 910 to 950 $kg/m^3$ and preferably in the range of 920 to 940 $kg/m^3$, still more preferably 930 to 940 $kg/m^3$.

Still another preferred embodiment in accordance with the present invention stipulates that component (E) has a $MFR_2$ determined according to ISO 1133 in the range of 0.5 to 5 g/10 min and preferably in the range of 1.5 to 3.5 g/10 min.

Suitable polyethylene and/or polypropylene containing units originating from maleic acid anhydride which may be used as component (E) according to the present invention are commercially available, for example from HDC Hyundai EP Co., Ltd. under the tradename Polyglue® GE300C.

Component (F)

The polymer composition according to the present invention may further comprise 0 to 8.0 wt.-%, preferably 2.0 to 8.0 wt.-% based on the overall weight of the polymer composition of a copolymer of ethylene and a polar comonomer being free of silane groups as component (F).

The content of component (F) in the polymer composition is preferably in the range of 0 to 8.0 wt.%, more preferably in the range of 2.0 to 8.0 wt.-%, still more preferably in the range of 3.0 to 4.0 wt.-% based on the overall weight of the polymer composition.

Component (F) is preferably a copolymer comprising ethylene units and units selected from the group consisting of methyl acrylate, methyl methacrylate, butyl acrylate and mixtures thereof, more butyl acrylate.

In another preferred embodiment according to the present invention component (F) is a copolymer comprising and preferably consisting of ethylene units and butyl acrylate units, preferably the content of butyl acrylate units is in the range of 10 to 35 wt.-% and preferably in the range of 15 to 20 wt.-% based on the overall weight of component (F).

Still another preferred embodiment in accordance with the present invention stipulates that component (F) has a density determined according to ISO 1183 in the range of 910 to 950 $kg/m^3$ and preferably in the range of 920 to 930 $kg/m^3$.

According to an additional preferred embodiment of the present invention component (F) has a $MFR_2$ determined according to ISO 1133 in the range of 0.1 to 15 g/10 min, preferably in the range of 1.0 to 12 g/10 min and preferably in the range of 5.0 to 10.0 g/10 min.

Suitable components which may be used as component (A) according to the present invention are commercially available, for example from Repsol (Spain) as Alcudia® PA-1715.

Additives

The polymer composition according to the present invention may also comprise additives.

According to a preferred embodiment of the present invention the polymer composition comprises at least one additive, preferably selected from the group consisting of slip agents, UV-stabiliser, antioxidants, additive carriers, nucleating agents, mica, hexadecyltrimethoxysilane and mixtures thereof, whereby UV-stabilisers, antioxidants and hexadecyltrimethoxysilane are preferred, these additives preferably are present in an amount of 0.01 to 5 wt.-% and more preferably in an amount of 0.5 to 4 wt.-% based on the overall weight of the polymer composition.

In case that the polyolefin composition of the present invention is crosslinked, it may comprise a scorch retarder. The scorch retarder may be a silane containing scorch retarder as described in EP 0 449 939 A1. If applicable, the scorch retarder may be present in the composition in an amount from 0.3 wt.-% to 5.0 wt.% based on the overall weight of the composition.

Polymer composition

As mentioned above the polymer composition according to the present invention comprises at least components (A) to (E) and optionally component (F) and additives.

A preferred polymer composition in according with the present invention comprises at least the following components:

(A) 15.0 to 25.0 wt.-% based on the overall weight of the polymer composition of a terpolymer comprising methyl acrylate units, more preferably having a density determined according to ISO 1183 in the range of 935 to 950 kg/m$^3$ and a MFR$_2$ determined according to ISO 1133 in the range of 0.2 to 5.0 g/10 min;

(B) 6.0 to 15.0 wt.-% based on the overall weight of the polymer composition of a copolymer of ethylene and 1-octene having a density in the range of 870 to 890 kg/m$^3$ measured according to ISO 1183 and a MFR$_2$ in the range of 0.5 to 1.5 g/10 min or 9.0 to 11.0 g/10 min measured according to ISO 1133 at 190°C and a load of 2.16 kg;

(C) 55.0 to 65.0 wt.-% based on the overall weight of the polymer composition of aluminium hydroxide having a purity of > 98 % and a particle size $d_{50}$ in the range of 0.1 to 10 μm;

(D) 0.5 to 2.5 wt.-% based on the overall weight of the polymer composition of an organomodified siloxane;

(E) 3.0 to 7.0 wt.-% based on the overall weight of the polymer composition of a linear low density polyethylene grafted with maleic anhydride having a density determined according to ISO 1183 in the range of 930 to 940 kg/m$^3$ and a MFR$_2$ determined according to ISO 1133 in the range of 0.5 to 5 g/10 min;

(F) 0 to 6.0 wt.-% based on the overall weight of the polymer composition of a copolymer of ethylene and a polar comonomer being free of silane groups; and

0 to 4.0 wt.-% based on the overall weight of the polymer composition of additives selected from the group consisting of UV-stabilisers, antioxidants and hexadecyltrimethoxysilane;

wherein the weight proportions of components (A) to (F) add up to 100 wt.-%.

Another preferred polymer composition in accordance with the present invention comprises at least the following components:

(A) 15.0 to 25.0 wt.-% based on the overall weight of the polymer composition of a terpolymer comprising methyl acrylate units, more preferably having a density determined according to ISO 1183 in the range of 935 to 950 kg/m$^3$ and a MFR$_2$ determined according to ISO 1133 in the range of 0.2 to 5.0 g/10 min;

(B) 6.0 to 15.0 wt.-% based on the overall weight of the polymer composition of a copolymer of ethylene and 1-octene having a density in the range of 870 to 890 kg/m$^3$ measured according to ISO 1183 and a MFR$_2$ in the range of 0.5 to 1.5 g/10 min or 9.0 to 11.0 g/10 min measured according to ISO 1133 at 190°C and a load of 2.16 kg;

(C) 55.0 to 65.0 wt.-% based on the overall weight of the polymer composition of aluminium hydroxide having a purity of > 99 % and a particle size dso in the range of 0.1 to 10 μm;

(D) 0.5 to 2.5 wt.-% based on the overall weight of the polymer composition of an organomodified siloxane;

(E) 3.0 to 7.0 wt.-% based on the overall weight of the polymer composition of a linear low density polyethylene grafted with maleic anhydride having a density determined according to ISO 1183 in the range of 930 to 940 kg/m$^3$ and a MFR$_2$ determined according to ISO 1133 in the range of 0.5 to 5 g/10;

(F) 3.0 to 6.0 wt.-% based on the overall weight of the polymer composition of a copolymer of ethylene and a polar comonomer being free of silane groups; and 2.5 to 4.0 wt.-% based on the overall weight of the polymer composition of additives selected from the group consisting of UV-stabilisers, antioxidants and hexadecyltrimethoxysilane;

wherein the weight proportions of components (A) to (F) and additives add up to 100 wt.-%.

Furthermore, another preferred embodiment of the present invention stipulates that the polymer composition has at least one of the following properties:

- passes the vertical flame test according to EN 60332-1/-2;
- has a Tensile Strength determined according to ISO 527-1 in the range of 9 to 20 MPa, preferably in the range of 11 to 15 MPa and more preferably in the range of 11 to 13 MPa;
- has an Elongation at Break determined according to ISO 527-2 in the range of 150 to 450 %, preferably in the range of 200 to 400 % and more preferably in the range of 200 to 350 %.

9

Method

The present invention further relates to a method for producing the polymer composition. The composition according to the invention can be produced by the methods known to the skilled person, for example mixing the components in a kneader and following extrusion.

Wire or cable

Another aspect of the present invention relates to a wire or cable comprising at least one layer comprising the polymer composition in accordance with the present invention.

According to a preferred embodiment of the present invention the at least one layer obtained from the polyolefin composition of the present invention may be cross-linked.

The wire or cable may be produced by co-extrusion of the different layers onto the conducting core. Then, crosslinking is optionally performed, preferably by moisture curing of the crosslinkable silane group, wherein the silane groups are hydrolyzed under the influence of water or steam. Moisture curing is preferably performed in a sauna or water bath at temperatures of 70 to 100°C or at ambient conditions.

The polymer composition in accordance with the present invention can be extruded around a wire or cable to form an insulating or jacketing layer or can be used as bedding compounds. The polymer compositions are then optionally crosslinked.

According to a preferred embodiment the wire or cable comprises an insulation layer, preferably comprising or consisting of a material selected from the group consisting of crosslinked or thermoplastic polyethylene, thermoplastic polypropylene or flame retardant polyolefins. Suitable flame retardant polyolefins are inter alia described in WO 2013/159942 A2. Suited thermoplastic insulations are for example disclosed in

WO 2007/137711 A1 or WO 2013/1599442 A2 and are commercially available for example from Borealis AG (Austria) under the tradenames FR4802, FR4803, FR4807, FR6082, FR6083 and FR4804. Commercially available crosslinkable insulation materials are also avaialbe from Borealis AG (Austria) under the tradenames FR4850 and FR4851.

An insulation layer of a low voltage power cable may have a thickness in the range of 0.4 mm to 3.0 mm, preferably below 2.0 mm, depending on the application. Preferably, the insulation is directly coated onto the electric conductor.

All preferred aspects and embodiments as described above shall also hold for the wire or cable according to the present invention.

Use

Another aspect of the present invention relates to the use of a polyolefin composition of the present invention as a flame retardant layer of a wire or cable.

The use of the polyolefin composition of the present invention as a flame retardant layer may comprise cross-linking thereof.

All preferred aspects and embodiments as described above shall also hold for the use according to the present invention.

The invention will now be described with reference to the following non-limiting examples.

**Experimental Part**

**A. Measuring methods**

The following definitions of terms and determination methods apply for the above general description of the invention as well as to the below examples unless otherwise defined.

**Melt Flow Rate (MFR)**

The MFR was measured according to ISO 1133 (Davenport R-1293 from Daventest Ltd). MFR values were measured at two different loads 2.16 kg ($MFR_2$) and 21.6 kg ($MFR_{21}$) at 190°C.

**Density**

The density was measured according to ISO 1183-1 - method A (2019). Sample preparation was done by compression moulding in accordance with ISO 1872-2:2007.

**Comonomer content in component A)**

**The content (wt.-% and mol-%) of polar comonomer present in the polymer and the content (wt.-% and mol.-% of silane group(s) containing units (preferably comonomer) present in the polymer composition (preferably in the polymer)**

Quantitative nuclear-magnetic resonance (NMR) spectroscopy was used to quantify the comonomer content of the polymer composition or polymer as given above or below in the context.

Quantitative $^1$H NMR spectra recorded in the solution-state using a Bruker Advance III 400 NMR spectrometer operating at 400.15 MHz. All spectra were recorded using a standard broad-band inverse 5 mm probehead at 100°C using nitrogen gas for all pneumatics.

Approximately 200 mg of material was dissolved in *1,2*-tetrachloroethane-$d_2$ (TCE-$d_2$) using ditertiarybutylhydroxytoluen (BHT) (CAS 128-37-0) as stabiliser. Standard single-pulse excitation was employed utilising a 30 degree pulse, a relaxation delay of 3 s and no sample rotation. A total of 16 transients were acquired per spectra using 2 dummy scans. A total of 32k data points were collected per FID with a dwell time of 60 μs, which corresponded to a spectral window of approx. 20 ppm. The FID was then zero filled to 64k data points and an exponential window function applied with 0.3 Hz line-broadening. This setup was chosen primarily for the ability to resolve the quantitative signals resulting from methyl acrylate and vinyltrimethylsiloxane copolymerisation when present in the same polymer.

Quantitative $^1$H NMR spectra were processed, integrated and quantitative properties determined using custom spectral analysis automation programs. All chemical shifts were internally referenced to the residual protonated solvent signal at 5.95 ppm.

When present characteristic signals resulting from the incorporation of vinylacetate (VA), methyl acrylate (MA), butyl acrylate (BA) and vinyltrimethylsiloxane (VTMS), in various comonomer sequences, were observed (Randell89). All comonomer contents calculated with respect to all other monomers present in the polymer.

The vinylacetate (VA) incorporation was quantified using the integral of the signal at 4.84 ppm assigned to the *VA sites, accounting for the number of reporting nuclei per comonomer and correcting for the overlap of the OH protons from BHT when present:

$$VA = ( I_{*VA} - (I_{ArBHT})/2) / 1$$

The methyl acrylate (MA) incorporation was quantified using the integral of the signal at 3.65 ppm assigned to the 1MA sites, accounting for the number of reporting nuclei per comonomer:

$$MA = I_{1MA} / 3$$

The butyl acrylate (BA) incorporation was quantified using the integral of the signal at 4.08 ppm assigned to the 4BA sites, accounting for the number of reporting nuclei per comonomer:

$$BA = I_{4BA} / 2$$

The vinyltrimethylsiloxane incorporation was quantified using the integral of the signal at 3.56 ppm assigned to the 1VTMS sites, accounting for the number of reporting nuclei per comonomer:

$$VTMS = I_{1VTMS} / 9$$

Characteristic signals resulting from the additional use of BHT as stabiliser, were observed. The BHT content was quantified using the integral of the signal at 6.93 ppm assigned to the ArBHT sites, accounting for the number of reporting nuclei per molecule:

$$BHT = I_{ArBHT} / 2$$

The ethylene comonomer content was quantified using the integral of the bulk aliphatic (bulk) signal between 0.00 - 3.00 ppm. This integral may include the 1VA (3) and αVA (2) sites from isolated vinylacetate incorporation, *MA and αMA sites from isolated methyl acrylate incorporation, 1BA (3), 2BA (2), 3BA (2), *BA (1) and αBA (2) sites from isolated butyl acrylate incorporation, the *VTMS and αVTMS sites from isolated vinyl silane incorporation and the aliphatic sites from BHT as well as the sites from polyethylene sequences. The total ethylene comonomer content was calculated based on the bulk integral and compensating for the observed comonomer sequences and BHT:

$$E = (1/4)*[\ I_{bulk} - 5*VA - 3*MA - 10*BA - 3*VTMS - 21*BHT\ ]$$

It should be noted that half of the $\alpha$ signals in the bulk signal represent ethylene and not comonomer and that an insignificant error is introduced due to the inability to compensate for the two saturated chain ends (S) without associated branch sites.

The total mole fractions of a given monomer (M) in the polymer was calculated as:

$$fM = M / (\ E + VA + MA + BA + VTMS\ )$$

The total comonomer incorporation of a given monomer (M) in mole percent was calculated from the mole fractions in the standard manner:

$$M\ [mol\%] = 100 * fM$$

The total comonomer incorporation of a given monomer (M) in weight percent was calculated from the mole fractions and molecular weight of the monomer (MW) in the standard manner:

M [wt.-%] = 10 * (fM * MW) / (fVA * 86.09) + (fMA * 86.09) + (fBA * 128.17) + (fVTMS * 148.23) + ((1 - fVA - fMA - fBA - fVTMS) * 28.05)) randall89: J. Randall, Macromol. Sci., Rev. Macromol. Chem. Phys. 1989, C29, 201.

If characteristic signals from other specific chemical species are observed the logic of quantification and/or compensation can be extended in a similar manner to that used for the specifically described chemical species. That is, identification of characteristic signals, quantification by integration of a specific signal or signals, scaling for the number of reported nuclei and compensation in the bulk integral and related calculations. Although this process is specific to the specific chemical species in question the approach is based on the basic principles of quantitative NMR spectroscopy of polymers and thus can be implemented by a person skilled in the art as needed.

**Dynamic Shear Measurements (frequency sweep measurements)**

The characterisation of melt of polymer composition or polymer as given above or below in the context by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \tag{1}$$

If the applied strain is within the linear viscoelastic regime, the resulting sinusoidal stress response can be given by

$$\sigma(t) = \sigma_0 \sin(\omega t + \delta) \tag{2}$$

where

$\sigma_0$ and $\gamma_0$ are the stress and strain amplitudes, respectively
$\omega$ is the angular frequency
$\delta$ is the phase shift (loss angle between applied strain and stress response)
t is the time.

Dynamic test results are typically expressed by means of several different rheological functions, namely the shear storage modulus G', the shear loss modulus, G", the complex shear modulus, G*, the complex shear viscosity, $\eta$*, the dynamic shear viscosity, $\eta$', the out-of-phase component of the complex shear viscosity $\eta$" and the loss tangent, tan $\delta$

which can be expressed as follows:

$$G' = \frac{\sigma_0}{\gamma_0}\cos\delta \ \ [\text{Pa}] \tag{3}$$

$$G'' = \frac{\sigma_0}{\gamma_0}\sin\delta \ \ [\text{Pa}] \tag{4}$$

$$G^* = G' + iG'' \ [\text{Pa}] \tag{5}$$

$$\eta^* = \eta' - i\eta'' \ [\text{Pa.s}] \tag{6}$$

$$\eta' = \frac{G''}{\omega} \ [\text{Pa.s}] \tag{7}$$

$$\eta'' = \frac{G'}{\omega} \ [\text{Pa.s}] \tag{8}$$

Besides the above-mentioned rheological functions one can also determine other rheological parameters such as the so-called elasticity index $EI(x)$. The elasticity index $EI(x)$ is the value of the storage modulus, G' determined for a value of the loss modulus, G" of x kPa and can be described by equation (9).

$$EI(x) = G' \ for \ (G'' = x \ kPa) \ [\text{Pa}] \tag{9}$$

For example, the EI(5kPa) is the defined by the value of the storage modulus G', determined for a value of G" equal to 5 kPa.

Shear Thinning Index ($SHI_{0.05/300}$) is defined as a ratio of two viscosities measured at frequencies 0.05 rad/s and 300 rad/s, $\mu_{0.0}5/\mu_{300}$.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.
[2] The influence of molecular structure on some rheological properties of polyethylene", Heino, E.L., Borealis Polymers Oy, Porvoo, Finland, Annual Transactions of the Nordic Rheology Society, 1995.
[3] Definition of terms relating to the non-ultimate mechanical properties of polymers, Pure & Appl. Chem., Vol. 70, No. 3, pp. 701-754, 1998.

Median Particle Size ($d_{50}$)

Median particle size of the metal hydroxide can be measured by laser diffraction (ISO13320), dynamic light scattering (ISO22412) or sieve analysis (ASTMD1921-06). For the metal hydroxides used in the working examples, the determination of the median particle size $d_{50}$ was conducted by laser diffraction. Any limitation of the claims shall refer to values obtained from laser diffraction (ISO13320).

Manufacturing of tape used for determination of tensile strength and elongation at break

For determining the tensile strength and elongation at break, tapes (1.8 mm ) were produced on a Collin TeachLine E20T tape extruder with a 4.2:1, 20D compression screw with a 20 mm diameter. The temperature profile was 150/160/170°C and the screw speed was 55 rpm.

Tensile Testing

Tensile testing was executed in accordance with ISO 527-1 and ISO 527-2 using an Alwetron TCT 10 tensile tester. Ten test specimen were punched from a plaque using ISO 527-2/5A specimen and placed in a climate room with relative humidity of 50 $\pm$ 5 % at a temperature of 23°C for at least 16 hours before the test. The test specimen were placed vertically between clamps with a distance of 50 $\pm$ 2 mm, extensometer clamps with a distance of 20 mm and a load cell of 1 kN. Before the test was carried out, the exact width and thickness for every sample was measured and recorded. Each sample rod was tensile tested with a constant speed of 50 mm/min until breakage and at least 6 approved parallels were performed. In highly filled systems, there is generally a big variation of the results and therefore the median value was used to extract a single value for elongation at break (%) and tensile strength (MPa).

BET surface

The BET surface is determined in accordance with ISO 9277 (2010).

Cable extrusion

The polymer composition was pre-blended with 3 wt.-% of a tin-based catalyst masterbatch prior cable extrusion. The cable extrusion was done on a Nokia-Maillefer cable line. The extruder has five temperature zones with temperatures of 120°C, 130°C, 140°C, 140°C and 140°C. The extrusion head temperature was set to 140°C. The extrusion screw is a barrier screw of the design Therese. The die is a pressure die with 2. 8mm diameter and the outer diameter of the cable is 2.8 mm. The compound is extruded on a 0.8 mm in diameter solid copper conductor. The line speed is 32 m/min. After the extrusion the cable was cooled in a water bath at 23°C.

Vertical flame test EN 60332-1/-2

A single insulated cable prepared as described above was fixed vertically in a burn chamber, as described in EN 60332-1 to test the resistance to 45°C vertical flame propagation. The flame has to self-extinguish and the damaged area has to be limited to pass the test. The tested cable was 60 cm long and placed vertically in a 1kW propane burner (>95 % purity). The cable was conditioned prior testing at 25°C with a 50% moisture level in the air. The cable passes the flame test if the fire extinguishes by itself, and the total damaged length of the cable is below 500mm .

**B. Materials used**

**Component (A)**

**Preparation of a "Si-copolymer 1" a copolymer of ethylene with methyl acrylate comonomer and with vinyl trimethoxy silane comonomer**

The copolymer of ethylene with methyl acrylate comonomer and vinyl trimethoxy silane comonomer (polymer 1) was produced in a commercial high pressure tubular reactor at a pressure 2500-3000 bar and max temperature 250-300°C using conventional peroxide initiator. Ethylene monomer, methyl acrylate (MA) polar comonomer and vinyl trimethoxy silane (VTMS) comonomer were added to the reactor system in a conventional manner. Chain transfer agent was used to regulate melt flow rate as well known for a skilled person. After having the information of the property balance desired for the final polymer 1, the skilled person can control the process to obtain polymer 1.

The amount of the vinyl trimethoxy silane units, VTMS, the amount of methyl acrylate, MA, and $MFR_2$ are given in below Table 1.

The properties in Table 1 were measured from the polymer as obtained from the reactor.

**Table 1:** Product properties of Si-copolymer 1.

| Properties of the polymer obtained from the reactor | Si-copolymer 1 |
| --- | --- |
| $MFR_{2,16}$, g/10 min | 3.5 |
| Methyl acrylate content, mol% (wt.-%) | 8.6 (22.5) |
| Melt Temperature, °C | 90 |
| VTMS content, mol% (wt.-%) | 0.27 (1.4) |
| Density, kg/m$^3$ | 946 |
| SHI (0.05/300), 150°C | 52 |

In above Table 1 MA denotes the content of Methyl Acrylate comonomer present in the polymer and, respectively, VTMS content denotes the content of vinyl trimethoxy silane comonomer present in the polymer.

**Si-copolymer 2** is a copolymer of ethylene and vinyl trimethoxy silane (1.9 wt.-% based on the total weight of the polymer) which contains 0.85 wt.-% HDTMS based on the total polymer and a MFR2 (190°C) of 1.0 g/10 min commercially available from Borealis AG (Austria).

**Component (B)**

**VLDPE-1** is a very low density copolymer of polyethylene and 1-octene having a density of 883 kg/m$^3$ and a MFR2 of 1.1 g/10 min, commercially available as Queo 8201 from Borealis AG (Austria).

**VLDPE-2** is a very low density copolymer of polyethylene and 1-octene having a density of 883 kg/m$^3$ and a MFR2 of 10.0 g/10 min, commercially available as Queo 8210 from Borealis AG (Austria).

**Component (C)**

**ATH** is aluminium trihydroxide commercially available as Apyral® 40CD (purity: 99.5 %, $d_{50}$ = 1.8 μm, not coated, BET surface of 3.5 g/m$^2$) from Nabaltec (Germany).

**Component (D)**

OMS is an organomodified siloxane, being a linear silicon fluid with a dynamic viscosity in the range from 1800 to 2200 mPas, commercially available from Wacker (Germany) as PTSP 2000.

**Component (E)**

**LLDPE-MAH** is a linear low density polyethylene grafted with maleic acid anhydride (maleic acid anhydride content = 0.5 to 1.0 wt.-%, $MFR_2$ = 2.5 g/10 min, density = 935 kg/m$^3$), commercially available from HDC Hyundai EP Co., Ltd. under the tradename Polyglue® GE300C.

**Component (F)**

EAC is an ethylene butyl acrylate copolymer which has a butyl acrylate comonomer content of 17.0 wt.%, ($MFR_2$ 190°C = 7 g/10 min, density 926 kg/m$^3$) based on the total weight of EAC1, which was produced as follows.

Fresh ethylene and recycled ethylene and comonomer butyl acrylate was compressed to reach an initial reactor pressure of 2500 bars in two parallel streams to supply the front and the side of a split feed 2 zone reactor with a varying L/D between around 17300 to 30400. Butyl acrylate comonomer was added in amounts to reach 17 wt.-% in the final polymer. An $MFR_2$ of the final polymer of 7.00 g/10 min was maintained. After compression, the front stream was heated to 151°C in a preheating section before entering the front zone of the reactor and the side stream was cooled and entered at the side of the reactor. Mixtures of commercially available peroxide radical initiators dissolved in an essentially inert hydrocarbon solvent were injected after the preheating section and at one more position along the reactor in amounts sufficient for the exothermal polymerization reaction to reach peak temperatures of 275°C, and 260°C respectively, with cooling in-between to 170°C. The reaction mixture was depressurised by a pressure control valve, cooled and the polymer was separated from unreacted gas.

**Further components**

**AO** are high molecular weight sterically hindered phenolic antioxidants, commercially available from BASF SE as Irganox 1010 (0.35 wt.-%) and Irganox MD1024 (0.15 wt.-%).

**HDTMS** is hexadecyltrimethoxysilane commercially available from Wacker (Germany).

**C) Preparation of the polymer compositions**

The polymer compositions according to the inventive examples (IE1 to IE4 and for comparative examples (CE1 to CE4) were produced by a batch-wise 5 L kneader from Myungshin Engineering. The chamber had two counter rotating rotors and the raw materials were compounded by heating the chamber and rotors to 135°C, adding all raw materials and knead the sample until the inside of the chamber reached 150°C. After kneading the sample was extruded in a single screw extruder with 3 temperature zones setpoint 140°C, 150°C and 150°C and pelletized. The amounts of the different components in the polymer compositions and the properties of the polymer compositions according to the inventive examples and the comparative examples can be gathered from below Table 2.

**Table 2:** Polymer compositions and properties of these polymer compositions.

| Component | Unit | CE1 | | CE2 CE3 CE4 | | IE1 | IE2 | IE3 | IE4 |
|---|---|---|---|---|---|---|---|---|---|
| Si-copolymer 1 (A) | wt.-% | - | - | - | 20 | - | 20 | 20 | 20 |
| Si-copolymer 2 (A) | wt.-% | 20 | 20 | 20 | - | 20 | - | - | - |
| VLDPE-1 (B) | wt.-% | - | 14.55 | - | 13.55 | - | 12.55 | 11.55 | 12.55 |
| VLDPE-2 (B) | wt.-% | 9 | - | - | - | 8 | - | - | - |
| ATH (C) | wt.-% | 60 | 60 | 60 | 60 | 60 | 60 | 60 | 60 |
| OMS (D) | wt.-% | - | - | 2 | - | 2 | 1 | 2 | 1 |
| LLDPE-MAH (E) | wt.-% | 4 | 4 | 4 | 5 | 4 | 5 | 5 | 4 |
| EAC (F) | wt.-% | 4.55 | - | 11.55 | - | 3.55 | - | - | - |
| AO | wt.-% | 0.45 | 0.45 | 0.45 | 0.45 | 0.45 | 0.45 | 0.45 | 0.45 |
| HDTMS | wt.-% | 2 | 1 | 2 | 1 | 2 | 1 | 1 | 1 |
| **Properties** | | | | | | | | | |
| Tensile Strength | MPa | 11.9 | 10.7 | 10.2 | 11.2 | 12.3 | 11.5 | 9.1 | 12.4 |
| Elongation at Break | % | 117 | 304 | 64 | 264 | 211 | 318 | 257 | 227 |
| Vertical flame test* | - | F | F | P | F | P | P | P | P |
| *F = fail, P = pass | | | | | | | | | |

### D) Discussion of the results

All polymer compositions shown in Table 2 contain 60 wt.-% of aluminium trihydroxide as flame retardant. However, only the examples additionally containing an organomodified siloxane (CE3, IE1 to IE4) pass the flame retardancy test according to EN 60332-1. The polymer composition according to CE3 passes the flame retardancy test, but has worse mechanical properties than the examples according to the present invention (IE1 to IE4). Only the specific combination of technical features according to the present invention allows to obtain polymer compositions having excellent flame retardant properties, but also very good mechanical properties expressed by a high tensile strength and elongation at break.

### Claims

1. A flame retardant polymer composition comprising at least the following components

   (A) 10.0 to 30.0 wt.-% based on the overall weight of the polymer composition of a cross-linkable ethylene copolymer containing units with hydrolysable silane groups;
   (B) 5.0 to 20.0 wt.-% based on the overall weight of the polymer composition of a copolymer of ethylene and a $C_4$ to $C_{10}$ alpha olefin comonomer having a density in the range of 860 kg/m$^3$ to 965 kg/m$^3$ determined according to ISO 1183;
   (C) 50.0 to 70.0 wt.-% based on the overall weight of the polymer composition of a filler selected from the group consisting of aluminium hydroxide, magnesium hydroxide and mixtures thereof;
   (D) 0.50 to 3.0 wt.-% based on the overall weight of the polymer composition of silicone fluid and/or a silicon gum; and
   (E) 1.0 to 10.0 wt.% based on the overall weight of the polymer composition of a polyethylene containing units originating from maleic anhydride;

   wherein the weight proportions of components (A) to (E) add up to 100 wt.-%.

2. The flame retardant polymer composition according to claim 1, **characterized in that**, the polymer composition further comprises

(F) 0 to 8.0 wt.-%, preferably 2.0 to 8.0 wt.-% based on the overall weight of the polymer composition of a copolymer of ethylene and a polar comonomer being free of silane groups;
wherein the weight proportions of components (A) to (E) and if present (F) add up to 100 wt.-%.

3. The flame retardant polymer composition according to claim 1 or 2, **characterized in that**, component (A) has one or more of the following properties:

   • is a terpolymer comprising methyl acrylate units, preferably the content of methyl acrylate units is in the range of 10 to 35 wt.-% and more preferably in the range of 20 to 30 wt.-% based on the overall weight of component (A);
   • has a density determined according to ISO 1183 in the range of 920 to 960 kg/m$^3$ and preferably in the range of 935 to 950 kg/m$^3$;
   • has a MFR$_2$ determined according to ISO 1133 in the range of 0.1 to 10 g/10 min and preferably in the range of 0.5 to 1.5 g/10 min or 3.0 to 4.0 g/10 min;
   • the units with hydrolysable silane-groups are represented by formula (I):

   $$R^1SiR^2_qY_{3-q} \qquad (I)$$

   wherein
   $R^1$ is an ethylenically unsaturated hydrocarbyl, hydrocarbyloxy or (meth)acryloxy hydrocarbyl group, each $R^2$ is independently an aliphatic saturated hydrocarbyl group, each Y which may be the same or different, is a hydrolysable organic group and q is 0, 1 or 2.

4. The flame retardant polymer composition according to any one of the preceding claims, **characterized in that**, component (B) has one or more of the following properties:

   • is a copolymer of ethylene and 1-octene;
   • has a density in the range of 870 kg/m$^3$ to 910 kg/m$^3$, preferably in the range of 870 to 900 kg/m$^3$ and more preferably in the range of 880 to 890 kg/m$^3$ measured according to ISO 1183;
   • has a MFR$_2$ in the range of 0.1 to 20.0 g/10 min, preferably in the range of 0.5 to 1.5 g/10 min or 9.0 to 11.0 g/10 min measured according to ISO 1133 at 190°C and a load of 2.16 kg.

5. The flame retardant polymer composition according to any one of the preceding claims, **characterized in that**, the filler (C) is aluminium hydroxide, preferably having one or more of the following properties:

   • a purity of > 95 %, preferably of > 98 %, more preferably of > 99 %, even more preferably in the range of 99.0 to 99.9 %;
   • a particle size $d_{50}$ measured according to ISO 13320 in the range of 0.1 to 10 μm, preferably in the range of 0.5 to 5 μm and more preferably in the range of 1 to 2.5 μm;
   • a BET surface area measured according to ISO 9277 in the range of 3 to 5 m$^2$/g;
   • is not coated.

6. The flame retardant polymer composition according to any one of the preceding claims, **characterized in that**, component (D) is a silicone fluid or silicone gum selected from the group consisting of polysiloxanes, preferably polydimethylsiloxane, and siloxanes containing alkoxy or alkyl functional groups and mixtures thereof, preferably component (D) is an organomodified siloxane.

7. The flame retardant polymer composition according to any one of the preceding claims, **characterized in that**, component (E) has one or more of the following properties:

   • is obtained by copolymerising and/or grafting polyethylene with maleic acid anhydride, whereby a maleic acid anhydride grafted linear low density polyethylene is preferred, more preferably the content of maleic acid anhydride is in the range of 0.3 to 2.0 wt.-%, based on the overall weight of component (E);
   • has a density determined according to ISO 1183 in the range of 910 to 950 kg/m$^3$ and preferably in the range of 930 to 940 kg/m$^3$;
   • has a MFR$_2$ determined according to ISO 1133 in the range of 0.5 to 5 g/10 min and preferably in the range of 1.5 to 3.5 g/10 min.

8. The flame retardant polymer composition according to any one of the preceding claims, **characterized in that**,

the content of component (A) in the polymer composition is in the range of 12.0 to 28.0 wt.%, preferably in the range of 15.0 to 25.0 wt.-% and more preferably in the range of 18.0 to 22.0 wt.-% based on the overall weight of the polymer composition; the content of component (B) in the polymer composition is in the range of 6.0 to 18.0 wt.%, preferably in the range of 6.5. to 15.0 wt.-% and more preferably in the range of 7.5 to 14.0 wt.-% based on the overall weight of the polymer composition; the content of component (C) in the polymer composition is in the range of 52.0 to 68.0 wt.%, preferably in the range of 55.0 to 65.0 wt.-% and more preferably in the range of 58.0 to 62.0 wt.-% based on the overall weight of the polymer composition; the content of component (D) in the polymer composition is in the range of 0.6 to 2.8 wt.%, preferably in the range of 0.7 to 2.5 wt.-% and more preferably in the range of 0.8 to 2.2 wt.-% based on the overall weight of the polymer composition;

the content of component (E) in the polymer composition is in the range of 2.0 to 8.0 wt.%, preferably in the range of 3.0 to 7.0 wt.-%, more preferably in the range of 3.5 to 5.5 wt.-% based on the overall weight of the polymer composition; and the content of component (F) in the polymer composition is in the range of 0 to 8.0 wt.%, preferably in the range of 2.0 to 8.0 wt.-%, more preferably in the range of 3.0 to 4.0 wt.-% based on the overall weight of the polymer composition;

9.  The polymer composition according to any one of the preceding claims, **characterized in that**,
    the polymer composition comprises at least one additive, preferably selected from the group consisting of slip agents, UV-stabilisers, antioxidants, additive carriers, nucleating agents, mica, hexadecyltrimethoxysilane and mixtures thereof, whereby UV-stabilisers, antioxidants and hexadecyltrimethoxysilane are preferred, these additives preferably are present in an amount of 0.01 to 5 wt.-% and more preferably in an amount of 0.5 to 4 wt.-% based on the overall weight of the polymer composition.

10. The polymer composition according to any one of the preceding claims, **characterized in that**,
    the polymer composition comprises at least the following components:

    (A) 15.0 to 25.0 wt.-% based on the overall weight of the polymer composition of a terpolymer comprising methyl acrylate units, preferably having a density determined according to ISO 1183 in the range of 935 to 950 kg/m$^3$ and a MFR$_2$ determined according to ISO 1133 in the range of 0.2 to 5.0 g/10 min;
    (B) 6.0 to 15.0 wt.-% based on the overall weight of the polymer composition of a copolymer of ethylene and 1-octene having a density in the range of 870 to 890 kg/m$^3$ measured according to ISO 1183 and a MFR$_2$ in the range of 0.5 to 1.5 g/10 min or 9.0 to 11.0 g/10 min measured according to ISO 1133 at 190°C and a load of 2.16 kg;
    (C) 55.0 to 65.0 wt.-% based on the overall weight of the polymer composition of aluminium hydroxide having a purity of > 98 % and a particle size $d_{50}$ measured according to ISO13320 in the range of 0.1 to 10 $\mu$m;
    (D) 0.5 to 2.5 wt.-% based on the overall weight of the polymer composition of an organomodified siloxane;
    (E) 3.0 to 7.0 wt.-% based on the overall weight of the polymer composition of a linear low density polyethylene grafted with maleic acid anhydride having a density determined according to ISO 1183 in the range of 930 to 940 kg/m$^3$ and a MFR$_2$ determined according to ISO 1133 in the range of 0.5 to 5 g/10 min;
    (F) 0 to 6.0 wt.-% based on the overall weight of the polymer composition of a copolymer of ethylene and a polar comonomer being free of silane groups; and 0 to 4.0 wt.-% based on the overall weight of the polymer composition of additives selected from the group selected consisting of UV-stabilisers, antioxidants and hexadecyltrimethoxysilane;

    wherein the weight proportions of components (A) to (F) add up to 100 wt.-%.

11. The polymer composition according to any one of the preceding claims, **characterized in that**,

    the polymer composition comprises at least the following components:

    (A) 15.0 to 25.0 wt.-% based on the overall weight of the polymer composition of a terpolymer comprising methyl acrylate units, preferably having a density determined according to ISO 1183 in the range of 935 to 950 kg/m$^3$ and a MFR$_2$ determined according to ISO 1133 in the range of 0.2 to 5.0 g/10 min;
    (B) 6.0 to 15.0 wt.-% based on the overall weight of the polymer composition of a copolymer of ethylene and 1-octene having a density in the range of 870 to 890 kg/m$^3$ measured according to ISO 1183 and a MFR$_2$ in the range of 0.5 to 1.5 g/10 min or 9.0 to 11.0 g/10 min measured according to ISO 1133 at 190°C and a load of 2.16 kg;
    (C) 55.0 to 65.0 wt.-% based on the overall weight of the polymer composition of aluminium hydroxide having a purity of > 99 % and a particle size $d_{50}$ measured according to ISO13320 in the range of 0.1 to 10 $\mu$m;
    (D) 0.5 to 2.5 wt.-% based on the overall weight of the polymer composition of an organomodified siloxane;

(E) 3.0 to 7.0 wt.-% based on the overall weight of the polymer composition of a linear low density polyethylene grafted with maleic acid anhydride having a density determined according to ISO 1183 in the range of 930 to 940 kg/m$^3$ and a MFR$_2$ determined according to ISO 1133 in the range of 0.5 to 5 g/10;

(F) 3.0 to 6.0 wt.-% based on the overall weight of the polymer composition of a copolymer of ethylene and a polar comonomer being free of silane groups; and 2.5 to 4.0 wt.-% based on the overall weight of the polymer composition of additives selected from the group consisting of UV-stabilisers, antioxidants and hexadecyltrimethoxysilane;

wherein the weight proportions of components (A) to (F) and additives add up to 100 wt.-%.

12. The polymer composition according to any one of the preceding claims, **characterized in that**, the polymer composition has at least one of the following properties:

• passes the vertical flame test according to EN 60332-1/-2;
• has a Tensile Strength determined according to ISO 527-1 in the range of 9 to 20 MPa, preferably in the range of 11 to 15 MPa and more preferably in the range of 11 to 13 MPa;
• has an Elongation at Break determined according to ISO 527-2 in the range of 150 to 450 %, preferably in the range of 200 to 400 % and more preferably in the range of 200 to 350 %.

13. A method for producing the polymer composition according to any one of claim 1 to 12.

14. A wire or cable comprising at least one layer comprising the polymer composition according to any one of claims 1 to 12.

15. Use of a polyolefin composition according to any one of claims 1 to 12 as a flame retardant layer of a wire or cable.

Europäisches
Patentamt
European
Patent Office
Office européen
des brevets

# EUROPEAN SEARCH REPORT

**Application Number**

EP 24 18 3248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 912 928 B (JIANGSU HENGTONG ELECTRONIC CABLE TECH CO LTD) 27 June 2023 (2023-06-27) * page 2 composition, ex 1-3 * ----- | 1-15 | INV. C08K3/016 C08L51/08 |
| A | EP 3 395 881 B1 (PROTERIAL LTD [JP]) 10 April 2024 (2024-04-10) * example 1; table 1 * ----- | 1-15 | |

TECHNICAL FIELDS
SEARCHED      (IPC)

C08K
C08L

The present search report has been drawn up for all claims

| Place of search | Date of completion of the search | Examiner |
|---|---|---|
| Munich | 10 December 2024 | Ritter, Nicola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

## EP 4 667 518 A1

### ANNEX TO THE EUROPEAN SEARCH REPORT
### ON EUROPEAN PATENT APPLICATION NO.

EP 24 18 3248

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | | Publication date | Patent family member(s) | Publication date |
|---|---|---|---|---|
| CN 113912928 | B | 27-06-2023 | NONE | |
| EP 3395881 | B1 | 10-04-2024 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018160457 A1
- WO 2020126618 A1
- EP 0449939 A1

- WO 2013159942 A2
- WO 2007137711 A1
- WO 20131599442 A2

**Non-patent literature cited in the description**

- *Encyclopedia of Polymer Science and Engineering*, 1986, vol. 6, 383-410
- Polyethylene: High-pressure. **R. KLIMESCH** ; **D. LITTMANN** ; **F.-O. MÄHLING**. Encyclopedia of Materials: Science and Technology. Elsevier Science Ltd, 2001, 7181-7184
- *CHEMICAL ABSTRACTS*, 128-37-0
- **J. RANDALL**. *Macromol. Sci., Rev. Macromol. Chem. Phys.*, 1989, vol. C29, 201

- **HEINO, E.L.** ; **LEHTINEN, A** ; **TANNER J.** ; **SEPPÄLÄ, J.** ; **NESTE OY** ; **PORVOO, FINLAND**. Rheological characterization of polyethylene fractions. *Theor. Appl. Rheol., Proc. Int. Congr. Rheol*, 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society*, 1995
- Definition of terms relating to the non-ultimate mechanical properties of polymers. *Pure & Appl. Chem.*, 1998, vol. 70 (3), 701-754